# EUROPÄISCHE PATENTSCHRIFT

(11) **EP 0 663 042 B1**
(45) Veröffentlichungstag und Bekanntmachung des Hinweises auf die Patenterteilung: **23.04.1997**
(21) Anmeldenummer: 94924827.2
(22) Anmeldetag: 30.07.1994
(51) Int. Cl.: F01L 1/26, F01L 13/00, F01L 9/04, F02D 13/02

(54) **HYBRIDGESTEUERTER VIERTAKT-OTTOMOTOR**
FOUR-STROKE PETROL ENGINE WITH HYBRID CONTROL
MOTEUR A ESSENCE A QUATRE TEMPS A COMMANDE HYBRIDE

(30) Priorität: 03.08.1993 DE 4325994; 09.12.1993 DE 4341945
(43) Veröffentlichungstag der Anmeldung: 19.07.1995
(73) Patentinhaber: FEV Motorentechnik GmbH & Co. KG, D-52078 Aachen (DE)
(72) Erfinder: SALBER, Wolfgang, D-52080 Aachen (DE); ESCH, Thomas, D-52070 Aachen (DE); SCHEBITZ, Michael, D-52068 Aachen (DE)
(74) Vertreter: Langmaack, Jürgen, Dipl.-Ing.
(86) Internationale Anmeldenummer: EP9402542
(87) Internationale Veröffentlichungsnummer: WO9504210

(56) Entgegenhaltungen:
- EP-A- 0 376 714
- GB-A- 2 197 686
- US-A- 5 183 011
- PATENT ABSTRACTS OF JAPAN vol. 8, no. 201 (M-325) (1638) 14. September 1984 & JP,A,59 090 718 (MITSUBISHI) 25. Mai 1984
- PATENT ABSTRACTS OF JAPAN vol. 7, no. 63 (M-200) (1208) 16. März 1983 & JP,A,57 206 723 (DAIHATSU) 18. Dezember 1982

## Beschreibung

Die Erfindung betrifft einen Viertakt-Ottomotor mit wenigstens einem Zylinder und je Zylinder mit wenigstens einem zwangsgesteuerten Einlaßventil und wenigstens einem zwangsgesteuerten Auslaßventil, wobei dem Einlaßventil wenigstens ein Einlaßkanal für die Zufuhr von Luft oder eines Luft-Kraftstoff-Gemisches zugeordnet ist.

Heutige Viertakt-Ottomotore sind aufgrund der Betriebsbedingungen und vielseitigen Einsatzbereiche für einen großen Drehzahl-/Lastbereich ausgelegt. Zur Realisierung hoher Drehmoment- und Leistungsdaten sowie eines akzeptablen Wirkungsgrad- und Abgasemissionsverhaltens im Teillastbetrieb und/oder im unteren Drehzahlbereich sind hinsichtlich der Ventilsteuerzeitenauslegung, des Ventilhubes, der Ventilsitzgeometrie, der Einlaßkanal- und Ansaugsystemkonstruktion und der Gemischbildung Kompromisse bezüglich der Auslegung einzugehen. Der Hauptbetriebsbereich der Motoren liegt im unteren Drehzahl-/Lastbereich, d. h. bei einem effektiven Mitteldruck von 0 bis etwa 5 bar und einer Drehzahl zwischen der Leerlaufdrehzahl und etwa 3500 U/min. Dieser Betriebsbereich deckt die Verweildauerzeit in den für die Typ- und Serienzulassung vorgeschriebenen Testzyklen zur Ermittlung der Abgasemissionen und und des Kraftstoffverbrauches zu über 90 Prozent ab.

Bei Viertakt-Ottomotoren wird bei quantitätsgeregelter Leistungssteuerung durch die eingesetzte Masse des Arbeitsfluids geregelt. Bei nockenwellengesteuertem Ladungswechsel ist eine Drosselung der Frischgemischmasse erforderlich, um den Motor in allen Betriebsbereichen, d. h. vom Leerlaufbetrieb mit geringer Frischgemischmasse bis hin zum Vollastbetrieb mit voll geöffnetem Drosselorgan, betreiben zu können. Eine Anpassung der Ladungszusammensetzung (Restgas, Frischgemisch) sowie eine drehzahlabhängige Anpassung der Ventilsteuerzeiten an den Vollastbetrieb erfolgt bei diesen drosselgesteuerten Motoren in der Regel lediglich durch eine Phasenverstellung der Ventilsteuerzeiten.

Eine drosselfreie Steuerung der eingesetzten Frischgemischmasse im gesamten Betriebsbereich ist mit dieser Phasenverstellung nicht möglich. Für den Betrieb bei höheren Drehzahlen und Lasten muß der Einlaßventilquerschnitt für den Ladungswechsel vergrößert werden. Praktisch wird dieses durch die Zuschaltung eines oder mehrerer Ventile realisiert. Diese zuschaltbaren Ventile können über Nockenwelle betätigt werden, wobei die Ladungsmenge drosselgesteuert wird. Eine stufenlose Regelung und Steuerung der Ladungsmenge und der Ladungszusammensetzung kann durch voll-variable Einlaßventilsteuerzeiten erzielt werden. Die bei drosselgesteuerten Verbrennungskraftmaschinen auftretenden prinzipbedingten Ladungswechselverluste lassen sich somit eliminieren. Des weiteren ist eine Anpassung der Ladungszusammensetzung in allen Betriebsbereichen möglich.

Die Nachteile der drosselgesteuerten Verbrennungsmotoren treten vorwiegend im unteren Drehzahl-/Lastbereich auf. Wird dieser Betriebsbereich mit Systemen zur Realisierung voll-variabler Steuerzeiten betrieben, werden durch die Einsparung der Drosselverluste sowie die Anpassung der Ladungszusammensetzung das Kraftstoffverbrauchsverhalten und die Abgasemissionen verbessert. Systeme zur Realisierung voll-variabler Steuerzeiten, speziell wenn die Ansteuerung über elektromechanische Stelleinheiten geschieht, können wirkungsgradoptimal speziell für diesen unteren Betriebsbereich im Kennfeld ausgelegt werden.

Aus GB-A-2 197 686 ist ein Motor mit zwei Einlaßventilen je Zylinder bekannt, deren als Schlepphebel ausgebildete Ubertragungsglieder über eine Nockenwelle angesteuert werden. Die Nockenwelle weist hierbei je Zylinder vier Nocken mit unterschiedlichen Steuerkonturen auf, wobei ansteuerbare Kupplungen vorgesehen sind, über die es möglich ist, wahlweise das eine oder das andere Einlaßventil oder auch beide Einlaßventile zusammen wiederum wahlweise mit den verschiedenen Steuernocken in Wirkverbindung zu bringen. Damit ist nur eine stufenweise Anpassung der Betätigung der Einlaßventile an die jeweiligen Lastanforderungen möglich.

Aus EP-A-0 376 714 ist eine Kolbenbrennkaftmaschine bekannt, bei der alle Ventile, d. h. sowohl das Auslaßventil als auch das Einlaßventil über elektromagnetische Aktuaktoren betätigt werden.

Aus Japan Abstract 57 206 723 ist eine Kolbenbrennkraftmaschine bekannt, bei der zwei Einlaßventile konventioneller Art vorgesehen sind, denen jeweils ein gesonderter Einlaßkanal zugeordnet ist.

Der Erfindung liegt nun die Aufgabe zugrunde, einen Viertakt-Ottomotor der eingangs bezeichneten Art so auszubilden, daß der Verbrennungsablauf und damit die Abgasemissionen und der Kraftstoffverbrauch verbessert wird, so daß sich sowohl für den Betrieb im Teillastbereich als auch im Vollastbereich ein optimaler Brennstoffverbrauch und optimale Abgaswerte ergeben.

Diese Aufgabe wird bei einem Viertakt-Motor mit mindestens zwei Einlaßventilen, wobei mindestens ein Einlaßventil als Hauptventil und mindestens ein Einlaßventil als Zusatzventil dient, das Hauptventil über ein Übertragungsglied mit einer Nockenwelle in Verbindung steht und das Übertragungsglied eine über eine Steuereinrichtung ansteuerbare Abschaltvorrichtung aufweist gemäß der Erfindung dadurch gelöst, daß, das Zusatzventil unabhängig von der Nockenwelle über eine von der Steuereinrichtung ansteuerbare Betätigungsvorrichtung betätigbar ist, über die der Ventilhub und/oder der Zeitpunkt für die Ventilöffnung und/oder der Zeitpunkt für die Ventilschließung verstellbar ist.

Mit einem derart ausgestalteten Viertakt-Ottomotor ist es möglich, den Ladungswechsel in großen Kennfeldbereichen sowohl drosselfrei mit vollvariablen Einlaßventilsteuerzeiten als auch gedrosselt mit festen oder phasenverschiebbaren Einlaßventilsteuerzeiten zu betreiben. In erfindungsgemäßer Ausgestaltung ist die ansteuerbare Betätigungsvorrichtung für eine stufenlose oder eine stufenweise Verstellung des Ventilhubes und/oder des Zeitpunktes der Ventilöffnung und/oder des Zeitpunktes des Ventilschließung ausgelegt.

Mit Hilfe eines derart ausgebildeten Viertakt-Ottomotors ist eine optimale Anpassung an die Betriebserfordernisse sowohl im unteren Teillastbereich als auch im oberen Teillastbereich bis hin zur Vollast möglich, so daß für das gesamte Kennfeld des Motors optimale Betriebsbedingungen geschaffen werden können. Durch die Anordnung des Zusatzventiles, über dessen ansteuerbare Betätigungsvorrichtung der Ventilhub und/oder der Zeitpunkt für die Ventilöffnung und/oder der Zeitpunkt für die Ventilschließung stufenlos oder in Stufen verstellbar ist, wobei das Hauptventil mit Hilfe der ansteuerbaren Abschaltvorrichtung in Schließstellung gehalten wird, besteht die Möglichkeit einer optimalen Anpassung an die Bedingungen im unteren Teillastbereich. Die Einströmbedingungen, die Ladungszusammensetzung und die Ladungsmenge kann den Betriebsbedingungen im Teillastbereich sowie für den Kaltstart und auch für den Warmlauf genau angepaßt werden. Dies erlaubt es auch, die Ladungsmenge über die Ansteuerung der Betätigungsvorrichtung zu steuern, so daß auf eine Drosselung des Massestroms des Luft-Kraft-stoff-Gemisches verzichtet werden kann. Die hierdurch bewirkte Minimierung der Drosselverluste hat eine deutliche Verringerung des Kraftstoffverbrauchs zur Folge. Die Verbesserung der Einströmbedingungen wird hierbei durch eine Anpassung des Ventilhubs, des von der Betätigungsvorrichtung gesteuerten Ventils, an den im Teillastbereich erforderlichen Massenstrom des Luft-Kraftstoff-Gemisches erzielt. Die Ladungszusammensetzung und die Ladungsmenge werden durch Veränderungen der Steuerzeiten, d. h. des Zeitpunktes für die Ventilöffnung und/oder des Zeitpunkts für die Ventilschließung beeinflußt. Als Betätigungsvorrichtung eignet sich hierbei vorteilhaft eine elektro-mechanisch arbeitende Einrichtung, wie sie beispielsweise aus der DE 30 24 109 C2 bekannt ist. Diese Einrichtung weist Druckfedern und zwei elektrisch arbeitende Schaltmagnete auf, über die das Zusatzventil in zwei diskrete, gegenüberliegende Schaltpositionen bewegbar ist und von dem jeweils zugehörigen Schaltmagneten in dieser Schaltposition gehalten werden kann. Die Gleichgewichtslage der auf das Zusatzventil einwirkenden Druckfedern liegt zwischen diesen beiden Schaltpositionen, wobei die Gleichgewichtslage der Druckfedern über eine vorzugsweise elektro-mechanische Spanneinrichtung in den Bereich einer der beiden Schaltpositionen verschoben werden kann. Diese Spanneinrichtung ist ebenso wie die beiden Schaltmagnete elektro-mechanisch betätigbar, so daß über eine entsprechende Steuerung des jeweiligen Erregerstroms für die Spulen der Schaltmagneten einerseits und der Magneten für die Spanneinrichtung andererseits eine gezielte Veränderung des Ventilhubs und/oder des Öffnungs- bzw. Schließzeitpunktes des Zusatzventils in Abhängigkeit von den Betriebsbedingungen im Teillastbereich möglich ist. Eine derartige elektro-mechanisch wirksame Betätigungsvorrichtung ist wegen der günstigen Ansteuerungsmöglichkeit über die Erregerströme zur Beeinflussung der einzelnen Funktionen anzusteuern.

Soll nun der Motor im oberen Teillastbereich bis hin zur Vollast betrieben werden, dann wird bei Überschreiten einer vorgebbaren Last- und Drehzahlgrenze die Betätigungsvorrichtung für das Zusatzventil in Schließposition gehalten und die Abschaltung des Hauptventils aufgehoben, so daß dann der vorgegebene optimale Betrieb über das vorzugsweise über eine Nockenwelle zwangsgesteuerte Hauptventil erfolgt.

Während es grundsätzlich möglich ist, Hauptventil und Zusatzventil über einen gemeinsamen Einlaßkanal zu beschicken, ist in einer vorteilhaften Ausgestaltung vorgesehen, daß für das Hauptventil einerseits und das Zusatzventil andererseits jeweils ein gesonderter Einlaßkanal vorgesehen ist. Dies ermöglicht es, die Einlaßkanalform für den unteren Teillastbereich, d. h. für den Betriebsbereich, bei dem das Hauptventil in Schließstellung gehalten wird und die Zufuhr der Luft oder des Luft-Kraftstoff-Gemisches in den Zylinder nur über das Zusatzventil erfolgt, genau an die für den Betriebsbereich geltenden Einströmbedingungen anzupassen.

Die Erfindung wird anhand schematischer Zeichnungen eines Ausführungsbeispieles näher erläutert. Es zeigen:
- Fig. 1: einen Vertikalschnitt durch einen Zylinder eines Viertakt-Ottomotors,
- Fig. 2: eine Ansicht gegen die Unterseite des Zylinderkopfes,
- Fig. 3: ein Drehmoment-Drehzahlkennfeld,
- Fig. 4: ein Ladungswechseldiagramm,
- Fig. 5: ein Blockschaltbild einer Motorsteuerung.

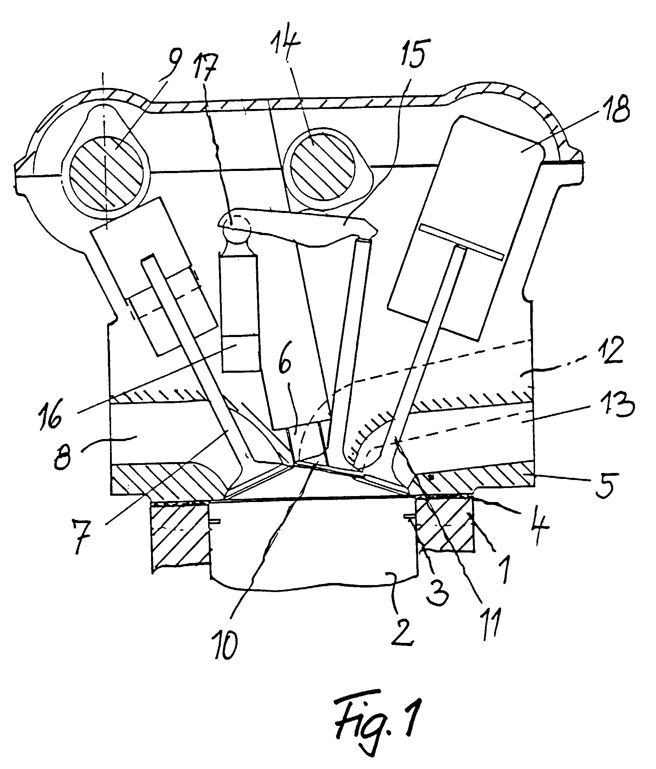

Fig. 1 zeigt einen schematischen Vertikalschnitt durch den oberen Teil eines Viertakt-Ottomotors in dem ein Kolben 2 in seiner Stellung im oberen Totpunkt dargestellt ist. Der Zylinder 1 mit den Kolbenringen 3 ist über eine Zylinderkopfdichtung 4 mit einem Zylinderkopf 5 abgedeckt, der mit einer Bohrung 6 zur Aufnahme einer Zündkerze versehen ist.

Im Zylinderkopf 5 ist mindestens ein Auslaßventil 7 je Zylinder angeordnet, das einen zugehörigen Abgaskanal 8 gegenüber dem Zylinderinnenraum absperrt. Das Auslaßventil wird in üblicher Weise über eine Nockenwelle 9 entsprechend dem Ladetakt angesteuert.

Einlaßseitig sind wenigstens zwei Einlaßventile 10 und 11 vorgesehen, denen bei dem dargestellten Ausführungsbeispiel jeweils gesonderte Einlaßkanäle 12 und 13 zugeordnet sind, so daß das Einlaßventil 10 dem Einlaßkanal 12 und das Einlaßventil 11 dem Einlaßkanal 13 zugeordnet ist. Zum besseren Verständnis der Darstellung in Fig. 1 sei darauf hingewiesen, daß die Schnittdarstellung nicht in einer Ebene verläuft, sondern daß, wie aus der Darstellung des Einlaßventils 10 ersichtlich ist, die Ventile in bezug auf die Zeichenebene räumlich versetzt nebeneinander angeordnet sind. Die Zuordnung wird nachstehend noch näher erläutert werden.

Das Einlaßventil 10 wird über eine Nockenwelle 14 und beispielsweise einen Schlepphebel 15 als Übertragungsglied betätigt. Der Schlepphebel 15 steht hierbei mit einer Abschaltvorrichtung 16 in Verbindung, die rein mechanisch, elektromechanisch oder mechanisch-hydraulisch in der Weise betätigbar ist, daß durch Absenken des Drehpunktes 17 für den Schlepphebel 15 der Schlepphebel 15 das Einlaßventil 10 nicht mehr öffnet und dieses im Schließzustand verbleibt. Das Einlaßventil 10 dient hierbei als Hauptventil und ist, wie nachstehend in Verbindung mit Fig. 3 noch näher beschrieben werden wird, bei einem Motorbetrieb im oberen Teillast- und Drehzahlbereich in Funktion. Das Einlaßventil 11 ist mit einer ansteuerbaren Betätigungseinrichtung 18 verbunden, die beispielsweise elektromechanisch aufgebaut ist und über die im Betriebszyklus im Ladetakt das Ventil 11 geöffnet und geschlossen werden kann. Die Betätigungsvorrichtung 18 ist hierbei so ausgelegt, daß hierüber der Ventilhub und/oder der Zeitpunkt für die Ventilöffnung und/oder der Zeitpunkt für die Ventilschließung stufenlos oder in Stufen verstellbar ist. Das Einlaßventil 11 dient als Zusatzventil und ist nur bei einem Motorbetrieb im unteren Teillast- und Drehzahlbereich in Funktion.

Die Anordnung kann nun je nach Motortyp so getroffen sein, daß ein Auslaßventil 7, ein nockenwellengesteuertes Einlaßventil 10 sowie ein über eine elektro-mechanische Betätigungsvorrichtung gesteuertes Einlaßventil 11 vorhanden sind. Die Zahl der nockengesteuerten Ventile ist jedoch je nach Motortyp variierbar. So ist in Fig. 2 in einer Untersicht des Zylinderkopfes eine Anordnung dargestellt, bei der zwei parallel betriebene Auslaßventile 7 sowie zwei parallel über die Nockenwelle 14 angesteuerte Einlaßventile 10 sowie ein über eine Betätigungsvorrichtung 18 ansteuerbares Einlaßventil 11 vorhanden ist.

Mit einer nachstehend noch näher zu beschreibenden Ansteuerung kann nun die Abschaltvorrichtung 16 angesteuert werden, die den Drehpunkt 17 des Schlepphebels 15 des Einlaßventils 10 und gleichzeitig die Betätigungsvorrichtung 18 des Einlaßventils 11 aktiviert und umgekehrt. Mit dieser Anordnung ist es nun möglich, wie in Fig. 3 schematisch dargestellt, im oberen Teillastbereich bis zur Vollastlinie und bei hohen Drehzahlen die Zufuhr des Luft-Kraftstoff-Gemisches über den Einlaßkanal 12 und das Einlaßventil 10 zu bewirken.

In Fig. 3 ist ein schematisches Kennfeld eines Viertakt-Ottomotores dargestellt. Das Kennfeld, d. h. die Abhängigkeit des Drehmomentes von der Drehzahl ist durch die Volllastlinie 19 begrenzt. Abhängig von der Ventilgeometrie des Einlaßventils 11 ist ein unterer Teillastbereich und eine Drehzahlgrenze 20 definiert, die über einen ebenfalls vorgebbaren Umschaltbereich 21 einen oberen Teillastbereich 22 abgrenzen. Die Steuereinrichtung ist hierbei so ausgebildet, daß im unteren Teillastbereich 20 über die Abschaltvorrichtung 16 das Hauptventil 10 in Schließstellung gehalten wird, so daß der Betrieb ausschließlich über die steuerbare Betätigungsvorrichtung 18 des Zusatzventils 11 erfolgt. Die gewünschte Leistungsoptimierung im unteren Teillastbereich wird hierbei über die Ansteuerung der Betätigungsvorrichtung 18 bewirkt. Sobald aufgrund der Drehzahlen und/oder des abgenommenen Drehmomentes der Teillastbereich 20 verlassen wird, kann in dem vorgegebenen Umschaltbereich 21 über das Steuersystem die Betätigungsvorrichtung 18 inaktiviert werden, so daß das Zusatzventil 11 in Schließstellung verbleibt und die Abschaltung des Hauptventils 10 aufgehoben wird, so daß nunmehr der Betrieb in üblicher Weise über das nockenwellengesteuerte Hauptventil 10 im oberen Teillastbereich erfolgt, wobei die Zufuhr der Luft oder des Luft-Kraftstoff-Gemisches in herkömmlicher Weise über eine last- und drehzahlabhängige drosselgesteuerte Ladungsrgelung erfolgt. Die Umschaltung vom Betrieb mit Zusatzventil auf den Betrieb mit Hauptventil und umgekehrt muß für jeden Zylinder in Abhängigkeit vom Arbeitstakt erfolgen, beispielsweise in der Ausstoßphase oder in der Kompressionsphase.

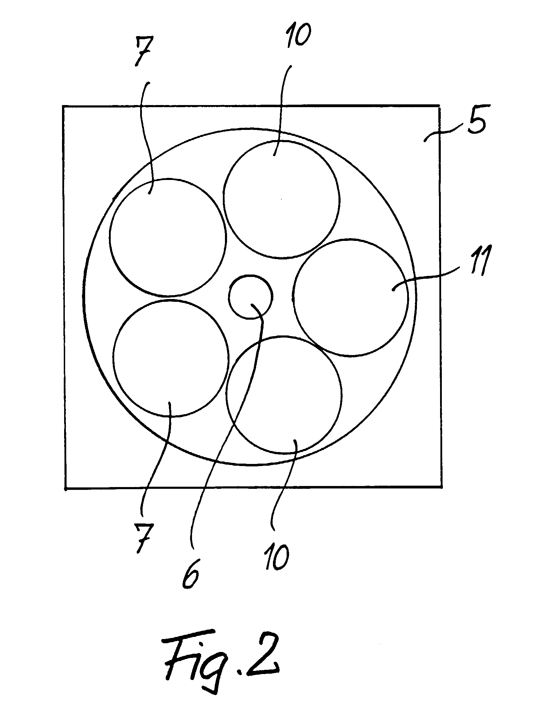

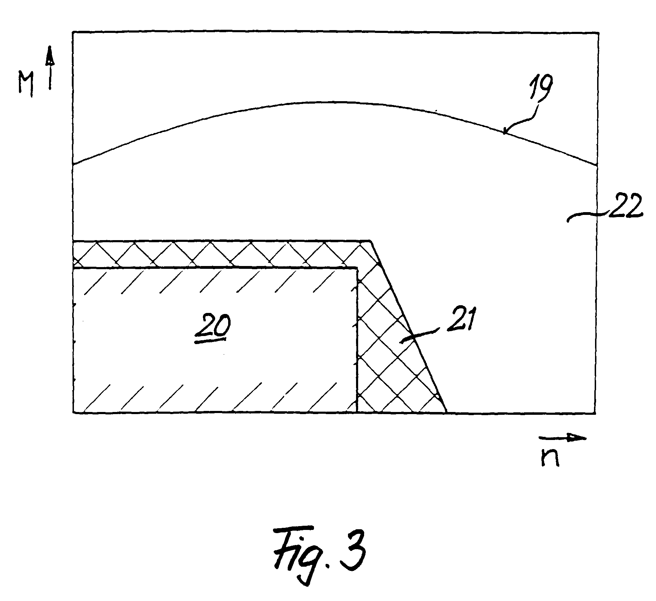

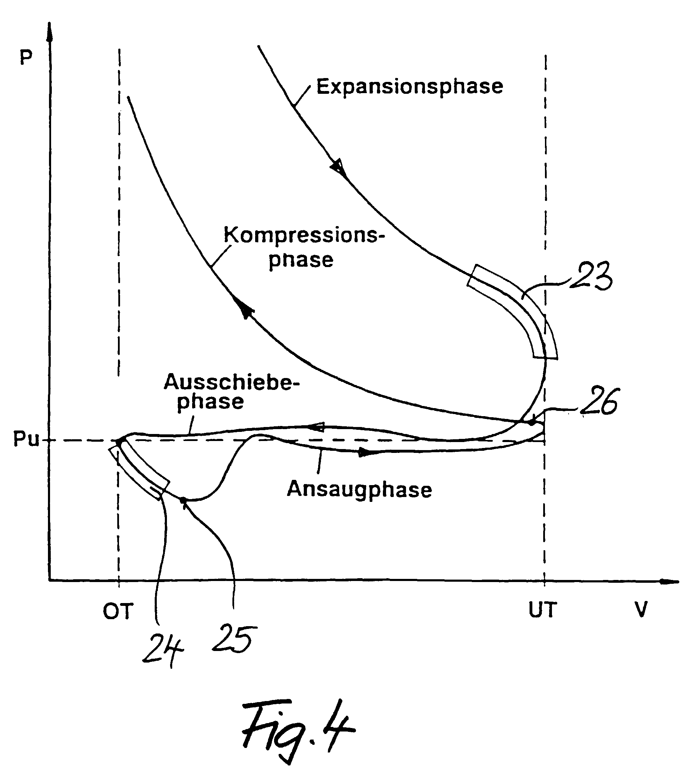

In Fig. 4 ist in einem Zylinder-Druckdiagramm für den Betrieb im unteren Teillastbereich ein Arbeitsspiel für einen Viertakt-Ottomotor dargestellt. In der Expansionsphase fällt der Druck ab, bis er kurz vor dem Erreichen des unteren Totpunktes UT einen Bereich 23 erreicht, in dem das Auslaßventil öffnet. Der angegebene Bereich 23 zeigt die Möglichkeit, über eine entsprechende Nockenwellenverstellung den öffnungszeitpunkt in einen Bereich zu verlegen, der vor dem Erreichen des unteren Totpunktes UT durch den Kolben liegt. Daran schließt dann die Ausschiebephase an, bis der Kolben wiederum den oberen Totpunkt OT erreicht hat. Bei nockenwellengesteuerten Auslaßventilen besteht hierbei die Möglichkeit, den Schließzeitpunkt des Auslaßventils 7 in dem durch das Feld 24 gekennzeichneten Bereich entsprechend den gewünschten Betriebsbedingungen noch zu verändern, beispielsweise um im nockenwellengesteuerten Betriebsbereich den Restgasanteil zu beeinflussen.

Da in diesem Betriebszustand das Zusatzventil 11 unabhängig von der Nockenwellensteuerung über die Betätigungsvorrichtung 18 betätigt wird, kann nun der Öffnungszeitpunkt 25 zur Optimierung der Einströmbedingungen in bezug auf die Position des Kolbens zum oberen Totpunkt OT beliebig und stufenlos verlegt werden. Beispielsweise zur Verbesserung des Kaltstart- und Warmlaufverhaltens ist es hierbei möglich, den Öffnungszeitpunkt 25 zu einem späteren Zeitpunkt nach dem oberen Totpunkt OT zu verlegen, so daß bei geschlossenem Zusatzventil 11 und geschlossenem Auslaßventil während der Abwärtsbewegung des Kolbens ein verminderter Druck im Zylinder entsteht, der beim späten Öffnen des Zusatzventils 11 ein Einströmen mit erhöhter Geschwindigkeit bewirkt. Die erhöhten Einströmgeschwindigkeiten bewirken die für eine thermodynamisch günstige schnelle Verbrennung nötige Turbulenz der Zylinderladung. Über eine entsprechende Ansteuerung der Betätigungsvorrichtung 18 kann hierbei der Zeitpunkt 25, d. h. der Zeitpunkt "Einlaß öffnet", stufenlos in einen Bereich bis hinter den unteren Totpunkt UT vor der Kompressionsphase verlegt werden. Der zugehörige Steuerzeitpunkt 26 "Einlaß schließt" wird hierbei lastabhängig angepaßt.

Die vorstehende Beschreibung der Arbeitsweise eines erfindungsgemäß ausgebildeten Viertakt-Ottomotors im Teillastbereich mit einem Zusatzventil 11 zeigt die großen Anpassungsmöglichkeiten an die jeweils herrschenden Betriebsbedingungen in diesem Bereich. Systembedingt muß bei den elektro-mechanisch gesteuerten Ventilen ein Freigang der dem Ventilhub entspricht, gewährleistet werden.

Da das Zusatzventil nur für den Betrieb im Teillastbereich benötigt wird, also ein entsprechend reduzierter Einlaßquerschnitt für diesen Betriebsbereich notwendig ist, ergibt sich die Möglichkeit, den maximal notwendigen Ventilhub und somit den Ventilfreigang, der durch in den Kolben eingearbeitete Ventiltaschen gewährleistet wird, zu reduzieren. Dies führt neben den betriebsbedingten Verbesserungen auch zu einer kompakteren Brennraumgestaltung und somit auch zu einer verbesserten Verbrennung mit geringeren Anteilen an unverbrannten Kohlenwasserstoffen. Des weiteren läßt sich infolge des geringeren Ventilfreigangs die Kolbenbodendicke und damit das Kolbengewicht deutlich reduzieren, was zu einer Verringerung der oszillierenden Massen und zu einer erheblichen Reduzierung der Reibungsverluste des Motors führt.

Im oberen Lastbereich 22 (vgl. Fig. 3) wird das Zusatzventil 11 durch die Betätigungsvorrichtung 18 in Schließposition gehalten, so daß das Zusatzventil 11 geschlossen bleibt und der Betrieb ausschließlich über das nockenwellengesteuerte Hauptventil 10 erfolgt. Die Ventilsitzgeometrie, der Einlaßkanal, das Saugsystem und der Gemischbildner können auf den für diesen Bereich notwendigen Ladungsdurchsatz mit größeren Mengen an Luft-Kraftstoff-Gemisch ausgelegt werden, wobei insbesondere die Möglichkeit gegeben ist, den Einlaßkanal 12 für das Hauptventil und den Einlaßkanal 13 für das Zusatzventil entsprechend dem unterschiedlichen Mengenstrom auszulegen.

Die Lage, Art und Zahl der Gemischbildner kann der Zahl der Einlaßkanäle und der Größe der Einlaßkanäle angepaßt werden. Es ist daher sowohl möglich, einen zentralen Gemischbildner vorzusehen und zwar für jeden einzelnen Zylinder, als auch für alle Zylinder. Des weiteren ist es möglich, einen zentralen Gemischbildner für den Betrieb im unteren Teillastbereich vorzusehen und eine Einzeleinspritzung für den Betrieb im nockenwellengesteuerten oberen Teillastbereich und für den Vollastbetrieb. Wegen der guten Anpassungsmöglichkeiten an die Anforderungen im unteren Teillastbereich ist es aber auch möglich, für diesen Bereich eine Einzeleinspritzung vorzusehen und für den Betrieb im oberen Teillast- und Vollastbereich einen zentralen Gemischbildner vorzusehen. Die Einzeleinspritzung kann dabei entweder ins Saugrohr oder direkt in den Brennraum erfolgen.

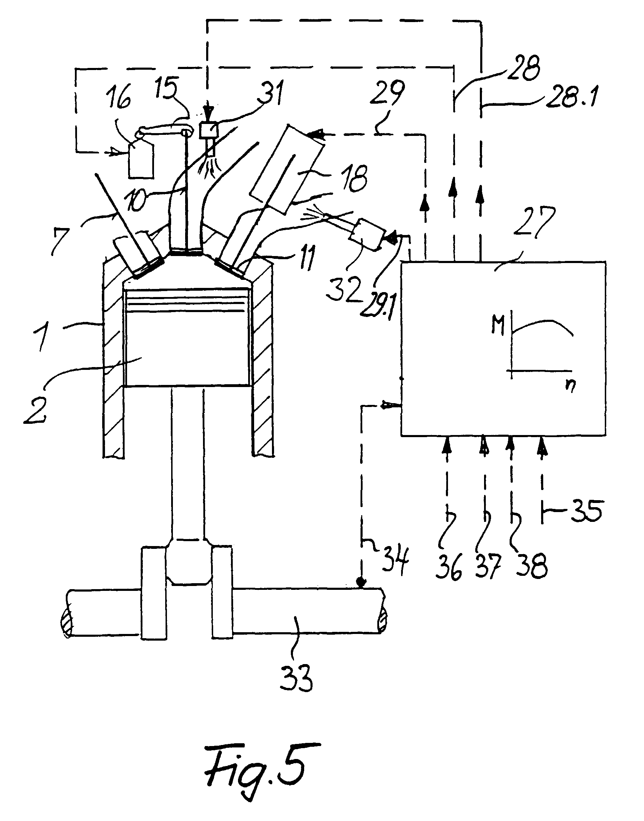

In Fig. 5 ist in einem Blockschaltbild die Ansteuerung der Betätigungseinrichtung 18 für einen Zylinder eines Viertakt-Ottomotors dargestellt, der in der in Fig. 1 dargestellten und beschriebenen Weise ausgerüstet ist. Gleiche Bezugszeichen kennzeichnen gleiche Bauelemente, so daß hinsichtlich Aufbau und Funktion auf die voraufgegangene Beschreibung verwiesen werden kann.

Für die Ansteuerung des Motors ist hierbei eine Steuereinrichtung 27 vorgesehen, in die ein vorgegebenes Kennfeld mit seinen einzelnen Schaltbereichen, beispielsweise eines unteren Teillastbereichs 20 mit einer vorgegebenen Drehzahlgrenze sowie einem vorgegebenen Umschaltbereich 21 und einem oberen Teillastbereich 22, wie dies anhand des schematischen Kennfeldes in Fig. 3 beschrieben ist, eingespeichert ist. Im Rechner der Steuereinrichtung 27 sind dann die entsprechenden Steuerparameter für die Ansteuerung der Zündung, der Kraftstoffversorgung sowie die Steuerung der Ventile in Abhängigkeit zumindest von der Lastvorgabe und der Motordrehzahl abgespeichert.

Von der Kurbelwelle 33 wird über einen entsprechenden Sensor 34 die Drehzahl abgegriffen und als Steuersignal der Steuereinrichtung 27 zugeführt. Ferner wird über einen entsprechenden, hier nicht näher dargestellten Geber über ein entsprechendes Stellsignal 35 die Lastvorgabe, d. h. die Stellung des Gaspedals der Steuereinrichtung 27 eingegeben. Zusätzlich zu diesen Grunddaten kann dann noch als weiterer Steuerparameter die über einen entsprechenden Sensor abgegriffene Kühlwassertemperatur (Signal 36) sowie die Außentemperatur (Signal 37) und der Umgebungsdruck (Signal 38) der Steuereinrichtung zugeführt werden, um die tatsächlichen Betriebsbedingungen in der Signalverarbeitung zur Erzeugung der entsprechenden Stellsignale in Abhängigkeit der durch die jeweilige Lage im Betriebskennfeld optimal erzeugen zu können.

Arbeitet der Motor in dem durch das Kennfeld 20 (Fig.3) vorgegebenen unteren Teillast- und Drehzahlbereich, so wird über ein Ausgangssignal 28 die Abschaltvorrichtung 16 für das nockengesteuerte Einlaßventil 10 angesteuert, so daß das Einlaßventil 10 in Schließstellung gehalten wird. Zugleich wird über das Stellsignal 28.1 die Kraftstoffzufuhr zum Einlaßventil 10 abgeschaltet, die hier durch eine Einspritzdüse eines entsprechenden Einspritzsystems für den oberen Teillast- und Drehzahlbereich angedeutet ist. Gleichzeitig wird über eine entsprechendes Stellsignal 29 die Betätigungsvorrichtung 18 angesteuert und das Zusatzventil 11 in Abhängigkeit der durch das einprogrammierte Betriebskennfeld für den Teillastbereich vorgegebene Bedingungen geöffnet, wie dies vorstehend beschrieben ist, beispielsweise in der Beschreibung zu Fig. 4. über ein entsprechendes Stellsignal 29.1 wird die Kraftstoffversorgung für den unteren Teillast- und Drehzahlbetrieb gesteuert, die hier schematisch durch ein dem Zusatzventil 11 zugeordnetes Einspritzventil 32 angedeutet ist.

## Patentansprüche

1. Viertakt-Ottomotor mit wenigstens einem Zylinder und je Zylinder mit wenigstens zwei zwangsgesteuerten Einlaßventilen und wenigstens einem zwangsgesteuerten Auslaßventil, wobei den Einlaßventilen wenigstens ein Einlaßkanal für die Zufuhr von Luft oder eines Luft-Kraftstoff-Gemisches zugeordnet ist, wobei mindestens ein Einlaßventil (10) als Hauptventil und mindestens ein Einlaßventil (11) als Zusatzventil dient, das Hauptventil (10) über ein Übertragungsglied (15) mit einer Nockenwelle (14) in Verbindung steht und das Übertragungsglied (15) eine über eine Steuereinrichtung (27) ansteuerbare Abschaltvorrichtung (16) aufweist,
**dadurch gekennzeichnet**, daß das Zusatzventil (11) unabhängig von der Nockenwelle (14) über eine von der Steuervorrichtung (27) ansteuerbare Betätigungsvorrichtung (18) betätigbar ist, über die der Ventilhub und/oder der Zeitpunkt für die Ventilöffnung und/oder der Zeitpunkt für die Ventilschließung verstellbar ist.

2. Viertakt-Ottomotor nach Anspruch 1, dadurch gekennzeichnet, daß die ansteuerbare Betätigungsvorrichtung (18) für eine stufenlose Verstellung des Ventilhubes und/oder des Zeitpunktes für die Ventilöffnung und/oder des Zeitpunktes für die Ventilschließung des Zusatzventils (11) ausgelegt ist.

3. Viertakt-Ottomotor nach Anspruch 1, dadurch gekennzeichnet, daß die ansteuerbare Betätigungsvorrichtung (18) für eine stufenweise Verstellung des Ventilhubes und/oder des Zeitpunktes für die Ventilöffnung und/oder des Zeitpunktes für die Ventilschließung des Zusatzventils (11) ausgelegt ist.

4. Viertakt-Ottomotor nach einem der Ansprüche 1, 2 oder 3, dadurch gekennzeichnet, daß für das Haupteinlaßventil (10) einerseits und das Zusatzeinlaßventil (11) andererseits jeweils ein gesonderter Einlaßkanal (12, 13) vorgesehen ist.

## Claims

1. Four-stroke petrol engine with at least one cylinder and for each cylinder at least two positively controlled inlet valves and at least one positively controlled outlet valve, wherein at least one inlet duct for supplying air or an air-fuel mixture is associated with the inlet valves, at least one inlet valve (10) serves as a main valve and at least one inlet valve (11) serves as an auxiliary valve, the main valve (10) is connected via a transmission unit (15) to a camshaft (14), and the transmission unit (15) comprises an uncoupling device (16) which can be controlled via a control device (27), characterised in that the auxiliary valve (11) can be actuated independently of the camshaft (14) via an actuation device (18), which can be controlled by the control device (27) and via which the valve lift and/or the instant for the valve opening and/or the instant for the valve closure can be adjusted.

2. Four-stroke petrol engine according to claim 1, characterised in that the controllable actuation device (18) is designed for continuous adjustment of the valve lift and/or the instant for the valve opening and or the instant for the valve closure of the auxiliary valve (11).

3. Four-stroke petrol engine according to claim 1, characterised in that the controllable actuation device (18) is designed for stepwise adjustment of the valve lift and/or the instant for the valve opening and or the instant for the valve closure of the auxiliary valve (11).

4. Four-stroke petrol engine according to one of claims 1, 2 and 3, characterised in that a respective separate inlet duct (12, 13) is provided for the main inlet valve (10) on the one hand and the auxiliary inlet valve (11) on the other.

## Revendications

1. Moteur à essence à quatre temps avec au moins un cylindre et, par cylindre, au moins deux soupapes d'admission à commande forcée et au moins une soupape d'échappement à commande forcée, au moins un canal d'admission pour l'apport d'air ou d'un mélange air-carburant étant associé aux soupapes d'admission,
au moins une soupape d'admission (10) servant de soupape principale et au moins une soupape d'admission (11) servant de soupape auxiliaire, la soupape principale (10) étant reliée par l'intermédiaire d'un organe de transmission (15) à un arbre à cames (14) et l'organe de transmission (15) présentant un dispositif de coupure (16) asservissable au moyen d'un dispositif de commande (27),
**caractérisé** en ce que la soupape auxiliaire (11) peut être actionnée indépendamment de l'arbre à cames (14) au moyen d'un dispositif d'actionnement (18), asservissable par le dispositif de commande (27) et permettant de régler la levée de la soupape et/ou l'instant d'ouverture de la soupape et/ou l'instant de fermeture de la soupape.

2. Moteur à essence à quatre temps selon la revendication 1, **caractérisé** en ce que le dispositif d'actionnement asservissable (18) est conçu pour un réglage en continu de la levée de la soupape auxiliaire (11) et/ou de l'instant d'ouverture et/ou de l'instant de fermeture de cette soupape.

3. Moteur à essence à quatre temps selon la revendication 1, **caractérisé** en ce que le dispositif d'actionnement asservissable (18) est conçu pour un réglage graduel de la levée de la soupape auxiliaire (11) et/ou de l'instant d'ouverture et/ou de l'instant de fermeture de cette soupape.

4. Moteur à essence à quatre temps selon une des revendications 1, 2 ou 3, **caractérisé** en ce qu'un canal d'admission respectif séparé (12, 13) est prévu pour la soupape d'admission principale (10) d'une part et pour la soupape d'admission auxiliaire (11) d'autre part.
